(19) **Europäisches Patentamt European Patent Office Office européen des brevets**

(11) **EP 4 195 490 A1**

(12) **EUROPEAN PATENT APPLICATION**

(43) Date of publication:
**14.06.2023 Bulletin 2023/24**

(51) International Patent Classification (IPC):
*H02M 7/487* (2007.01)    *H02M 1/12* (2006.01)
*H02M 1/15* (2006.01)    *H02M 1/32* (2007.01)

(21) Application number: **21213343.3**

(22) Date of filing: **09.12.2021**

(52) Cooperative Patent Classification (CPC):
**H02M 7/487; H02M 1/12; H02M 1/15; H02M 1/32**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **ABB SCHWEIZ AG**
**5400 Baden (CH)**

(72) Inventors:
• **Darivianakis, Georgios**
**8046 Zürich (CH)**

• **Rohr, Eduardo**
**Camberwell, 3124 (AU)**
• **Kieferndorf, Frederick**
**5400 Baden (CH)**
• **Geyer, Tobias**
**5408 Ennetbaden (CH)**

(74) Representative: **Qip Patentanwälte**
**Dr. Kuehn & Partner mbB**
**Goethestraße 8**
**80336 München (DE)**

(54) **OPTIMIZED PULSE PATTERNS FOR CONTROLLING A NEUTRAL POINT VOLTAGE**

(57)    A method for controlling an electrical converter (10) comprises: determining an actual modulation index (m) and an actual pulse number (d); determining a neutral point voltage ($v_{np}$) of the neutral point (NP); determining an actual neutral point balancing value (32) from the neutral point voltage ($v_{np}$); determining an optimized pulse pattern (36) to be applied to the electrical converter (10) from a table (26) of optimized pulse patterns (24) stored in a controller (28) of the electrical converter (10); applying the determined optimized pulse pattern (36) to the electrical converter (10). The table (26) of optimized pulse patterns (24) is indexed with respect to a set of modulation indices (m) and a set of pulse numbers (d) and the optimized pulse pattern (36) is determined based on the actual modulation index (m) and the actual pulse number (d). For a modulation index (m) and a pulse number (d), an optimized pulse pattern (24) stored in the table (26) comprises switching angles and at least one of a switching state and switching transition of the at least one phase leg (16) for each switching angle. For at least some modulation indices (m) and some pulse numbers (d), an optimized pulse pattern (24) stored in the table (26) with respect to a modulation index (m) and a pulse number (d) comprises switching angles, which correspond to different neutral point balancing values (32). The switching angles of the optimized pulse pattern (24) to be applied to the electrical converter (10) are determined from the switching angles, which correspond to different neutral point balancing values, as a function of the actual neutral point balancing value (32).

**Fig. 2**

**Description**

FIELD OF THE INVENTION

The invention relates to the field of converter control with optimized pulse patterns. In particular, the invention relates to a method, controller, computer program and computer-readable medium for controlling an electrical converter. The invention further relates to a computer-readable medium storing a table of optimized pulse patterns.

BACKGROUND OF THE INVENTION

Three level neutral point (NP) clamped converters have a DC-link, with a pair of series connected capacitors, which is connected between a DC+ and a DC- terminal of the converter. The middle point between the two capacitors is called the neutral point and, besides the DC+ and a DC- terminals, the electrical converter is designed to connect the one or more AC phase terminals also to the neutral point to generate the three voltage levels.

To protect the semiconductors, it is usually necessary to keep the neutral point voltage (also called neutral point potential), i.e. the difference between the capacitor voltages, within a specific range. Several control methods exist, which achieve this objective. However, most of these methods use carrier based pulse width modulation or equivalent. This is usually a benefit from the point of view of control, because it is easier to do. On the other hand, the harmonic performance at the terminals may degrade. Therefore, these methods must navigate within the limits of NP control where the reference signal is passed into a pulse width modulation modulator. The change in switching angles is determined by the intersection of the adjusted reference and the carrier signals or in the case of space vector modulation a change in the time to the next switching.

Some control methods are based on optimized pulse patterns (OPP). In the methods involving adjustment of OPP patterns, usually a common offset is injected to all the affected angles. Quarter wave symmetry for the OPPs is also typically used, which limits the ability to inject a DC-offset at all power factors.

US 10 516 328 B2 describes a method for controlling a three-phase electrical converter. A three-phase optimized pulse pattern is selected from a table of pre-computed optimized pulse patterns based on a reference flux. The optimized pulse pattern is modified by time-shifting switching instants of the optimized pulse pattern such that a cost function depending on the time-shifts is minimized, wherein the cost function comprises a flux error term and a third variable error term. In the end, the modified optimized pulse pattern is applied to the electrical converter. The third variable may be the neutral point voltage.

DESCRIPTION OF THE INVENTION

It is an objective of the invention to improve the control of the neutral point voltage of an electrical converter, which is controlled based on optimized pulse patterns. A further objective of the invention is to provide a control method based on optimized pulse patterns, which is adapted for controlling the neutral point voltage, while additional control objectives, such as low harmonic distortion, meeting of grid codes, low losses, fast tracking of a reference voltage, etc., can be met with low computational demands and/or high accuracy.

These objectives are achieved by the subject-matter of the independent claims. Further exemplary embodiments are evident from the dependent claims and the following description.

An aspect of the invention relates to a method for controlling an electrical converter. The method may be performed by a controller of the electrical converter.

The electrical converter comprises a positive DC+ terminal and a negative DC- terminal. These terminals may be connected to a DC voltage source and/or load. The DC+ terminal and the DC- terminal may be interconnected by two series connected DC-link capacitors. The electrical converter furthermore comprises a neutral point, which may be provided by a midpoint terminal between the two DC-link capacitors. The electrical converter furthermore comprises at least one phase terminal connectable to the positive DC+ terminal and the negative DC- terminal and to the neutral point via at least one phase leg with semiconductor switches. There may be one, two, three or more phase terminals. The semiconductor switches may be transistors or thyristors. The phase leg may be a (possibly active) neutral point clamped phase leg.

According to an embodiment of the invention, the method comprises: determining an actual modulation index and an actual pulse number. These quantities may be determined from a phase reference voltage, a frequency reference, a phase flux reference and/or a torque reference of the electrical converter.

The method further comprises: determining a neutral point voltage. The neutral point voltage may be determined from measurements at the DC-link of the electrical converter.

The method further comprises: determining an actual neutral point balancing value from the neutral point voltage. The neutral point balancing value, which also may be seen as a signal, is indicative of how much the neutral point voltage differs from a reference value, which may be half of the DC-link voltage. The neutral point balancing value may be a discrete value, such as +1, 0, -1, or may be a continuous value, such as the offset of the neutral point voltage from the reference value or a function of the neutral point voltage.

The method further comprises: determining an optimized pulse pattern to be applied to the electrical converter from a table of optimized pulse patterns stored in a controller of the electrical converter. As a function of the actual modulation index, the actual pulse number and the actual neutral point balancing value, an optimized pulse pattern is determined from the table.

It may be that the optimized pulse patterns in the table are indexed with respect to modulation indices, the pulse numbers and neutral point balancing values. In this case, the optimized pulse pattern to be applied to the electrical converter is selected from the table as a function of the actual modulation index, the actual pulse number and the actual neutral point balancing value.

It may be that the optimized pulse patterns in the table are indexed with respect to modulation indices and the pulse numbers and that different switching angles of the optimized pulse patterns are stored with respect to different neutral point balancing values. In this case, the optimized pulse pattern to be applied to the electrical converter is selected from the table as a function of the actual modulation index and the actual pulse number and the switching angles are either selected dependent on the actual neutral point balancing value or determined by interpolation and/or extrapolation from stored switching angles as a function of the actual neutral point balancing value.

In general, the table of optimized pulse patterns is indexed with respect to a set of modulation indices and a set of pulse numbers and the optimized pulse pattern is determined based on the actual modulation index and the actual pulse number. For a modulation index and a pulse number, an optimized pulse pattern is stored in the table and comprises switching angles and at least one of switching states and switching transitions of the at least one phase leg. For at least some modulation indices and some pulse numbers, an optimized pulse pattern stored in the table with respect to a modulation index and a pulse number comprises switching angles, which correspond to different neutral point balancing values. For one optimized pulse pattern, there may be switching angles for different neutral point balancing values.

The switching angles of the optimized pulse pattern to be applied to the electrical converter are determined from the switching angles, which correspond to different neutral point balancing values, as a function of the actual neutral point balancing value.

The method further comprises: applying the determined optimized pulse pattern to the electrical converter. The optimized pulse pattern to be applied to the electrical converter comprises switching angles, from which switching times can be determined, and switching states and/or switching transitions, from which the switch positions of the semiconductor switches can be determined. The semiconductor switches of the at least one phase leg then may be switched accordingly.

The method may be used for neutral point voltage balancing of a 3-level (active) neutral-point clamped converter. However, the method also may be applied to electrical converters with more than three levels, which have a neutral point. The method computes an optimized pulse pattern that allows for a DC-offset to be added to the neutral point current. This DC-component of the neutral point current is used to regulate the neutral point voltage. The method may be used to create the same neutral point current regardless of the phase and amplitude of the fundamental phase current component. This may be an advantage over other methods that rely on common mode injection and which may not work when the fundamental current is low, or shifted by around 90 degrees with respect to the fundamental voltage component.

According to an embodiment of the invention, the neutral point balancing value is at least indicative of reducing and increasing the neutral point voltage. A positive value or a value of +1 may indicate increasing the neutral point voltage. A negative value or a value of -1 may indicate reducing the neutral point voltage.

According to an embodiment of the invention, an optimized pulse pattern for a modulation index and a pulse number comprises a first vector of switching angles corresponding to reducing the neutral point voltage and a second vector of switching angles corresponding to increasing the neutral point voltage. In this case, the optimized pulse pattern to be applied to the electrical converter may be selected by selecting the first or second vector dependent on the actual neutral point balancing value.

According to an embodiment of the invention, the neutral point balancing value is indicative of maintaining the neutral point voltage. A value within a range around 0 or a value of 0 may indicate maintaining the neutral point voltage.

According to an embodiment of the invention, an optimized pulse pattern for a modulation index and a pulse number comprises a vector of switching angles corresponding to maintaining the neutral point voltage.

According to an embodiment of the invention, an optimized pulse pattern stored in the table with respect to a modulation index and a pulse number comprises data values to determine a switching angle for at least two different neutral point balancing values. For example, there may be a switching angle for each of the at least two different neutral point balancing values. The neutral point balancing value may be proportional to a neutral point current and there may be a switching angle for a largest positive neutral point current and a largest negative neutral point current. There also may be data values for a specific switching angle at a specific neutral point balancing value and a slope data value, when deviating from the specific neutral point balancing value.

According to an embodiment of the invention, switching angles, for example between the at least two different neutral point balancing values, are determined by interpolation between the data values and/or extrapolation with respect to the data values. The switching angles of the optimized pulse pattern to be applied to the electrical converter may be determined from the data values stored in the table as a function of the actual neutral point balancing value.

According to an embodiment of the invention, the actual neutral point balancing value is selected from a set of discrete values. As already mentioned, these discrete values may comprise +1, -1 and 0.

According to an embodiment of the invention, the neutral point balancing value is determined from the neutral point voltage with a hysteresis controller. The neutral point voltage may be filtered, averaged and/or integrated over a time window and whenever the result is higher and/or lower than a reference, the respective discrete value may be chosen for the actual neutral point balancing value. For example, the neutral point voltage or the error of the neutral point voltage may be processed by a PI controller. Then, when the output of the PI controller crosses a limit of a hysteresis controller, the optimized pulse pattern is changed to the appropriate one.

According to an embodiment of the invention, the actual neutral point balancing value is a function of an offset of the neutral point voltage with respect to a reference value. This offset may be integrated over a time window.

According to an embodiment of the invention, the neutral point balancing value is determined with a PI controller from the neutral point voltage, i.e. may comprise a term proportional to an offset of the neutral point voltage to a reference value and may comprise a term being the integral of an offset of the neutral point voltage to a reference value (the same or a different reference value). In this case, the neutral point balancing value may be proportional to a neutral point current.

According to an embodiment of the invention, an actual active power reference to be provided at the at least one phase terminal is determined. The active power reference may be provided by an outer controller and/or may be determined from measurements at the terminals of the electrical converter.

According to an embodiment of the invention, the table of optimized pulse patterns is additionally indexed with respect to a set of active power references. An optimized pulse pattern in the table may have been optimized to generate the respective active power indicated by the active power reference, when applied to the electrical converter.

According to an embodiment of the invention, an optimized pulse pattern to be applied to the electrical converter is selected with respect to the actual active power reference.

According to an embodiment of the invention, the optimized pulse patterns stored in the table are calculated offline, i.e. before the control of the electrical converter is performed. The optimized pulse patterns may be stored in the controller of the electrical converter before the control of the electrical converter is performed. In particular, the method may comprise an offline part and an online part. In the offline part, which may be performed remote from the electrical converter, the optimized pulse patterns may be calculated. In the online part, the electrical converter is controlled based on the optimized pulse patterns.

According to an embodiment of the invention, the optimized pulse patterns stored in the table have been optimized and/or are optimized offline to generate a non-zero DC-component of the neutral point current. For a modulation index and pulse number, there may be optimized pulse patterns for generating a positive offset for the neutral point voltage and for generating a negative offset for the neutral point voltage, when applied to the electrical converter. There also may be optimized pulse patterns, which maintain the neutral point voltage, i.e. generate a zero offset. These optimized pulse patterns may be stored with the aid of switching angles, which are indexed with respect to different neutral point balancing values.

It has to be understood that the optimized pulse patterns have been optimized and/or are optimized offline to meet further objectives, such as low harmonic distortion, low losses, etc.

According to an embodiment of the invention, the optimized pulse patterns are stored in the table for a complete fundamental cycle, i.e. a cycle from 0° to 360°. Only pulse patterns, which are asymmetric with respect to the first and second half-cycle, are able to generate a DC neutral point current different from 0. In particular, the optimized pulse patterns stored in the table may be asymmetric with respect to the first and second half-cycle.

According to an embodiment of the invention, the optimized pulse patterns are asymmetric with respect to a quarter of the complete fundamental cycle.

The invented method involves optimally adjusting all angles over a full fundamental cycle without any consideration to symmetry. This allows full use of all the current harmonics independent of the fundamental phase current and its phase angle relative to the fundamental phase voltage.

According to an embodiment of the invention, the method further comprises: modifying the switching angles of the determined optimized pulse pattern with model predictive control. It may be that the optimized pulse pattern, which has been determined from the table of optimized pulse patterns, is modified before it is applied to the electrical converter. Such a modification may be performed with model predictive control to achieve further control objectives. The additional application of model predictive control may be beneficial in dynamic situations, where reference quantities may change quickly.

According to an embodiment of the invention, the switching angles are modified to track a reference flux trajectory. Such a reference flux trajectory may be provided by an outer controller or may be determined with the aid of the table of optimized pulse patterns, where information about a reference flux trajectory with respect to the actual control parameters may be stored.

According to an embodiment of the invention, an optimized pulse pattern stored in the table with respect to a modulation index and a pulse number comprises corner points for a reference flux trajectory corresponding to the switching angles of the optimized pulse patterns, in particular for all the phase legs transformed to 2-dimensions (the so-called alpha/beta frame). From these corner points, the reference flux trajectory input into model predictive control may be determined.

According to an embodiment of the invention, the optimized pulse pattern stored in the table comprises parameters for curves for the corner points for interpolating and/or extrapolating the corner points between different neutral point balancing values. The reference flux trajectory may be stored as a curve in the alpha/beta coordinate system. This curve may be defined with corner points, which also may be provided in the alpha/beta system.

According to an embodiment of the invention, interpolated and/or extrapolated corner points for an interpolated and/or extrapolated reference flux trajectory are determined from the actual neutral point balancing value. Not only the switching angles but also the reference flux trajectory may be determined as a function of the actual neutral point balancing value.

A further aspect of the invention relates to a controller for an electrical converter adapted for performing the method as described above and below. Such a controller may comprise a processor and a memory. The processor may be adapted for processing a computer program, which at least partially executes the method as described above and below. The processor also may be based at least partially on a DSP and/or FPGA. The memory may comprise a non-volatile memory, in which the computer program is stored. In the non-volatile memory, also the table of optimized pulse patterns may be stored.

A further aspect of the invention relates to an electrical converter with such a controller. The electrical converter may comprise a split DC-link with a neutral point and for each phase a phase leg designed for connecting a DC+ terminal, a DC- terminal and a neutral point terminal with a phase terminal. The electrical converter may comprise one, two, three or more AC phase terminals . The controller of the converter may be connected to voltage and/or current sensors in the electrical converter, which are adapted for measuring voltages and/or currents in the electrical converter from which the neutral point voltage, the DC-link voltage and/or the phase voltages and/or phase currents can be derived.

A further aspect of the invention relates to a computer program, which, when being executed by a processor of a controller of an electrical converter, is adapted for performing the method as described in the above and in the following.

A further aspect of the invention relates to a computer-readable medium, in which such a computer program is stored. The computer-readable medium may be a memory of the controller.

In general, a computer-readable medium may be a floppy disk, a hard disk, a USB (Universal Serial Bus) storage device, a RAM (Random Access Memory), a ROM (Read Only Memory), an EPROM (Erasable Programmable Read Only Memory) or a FLASH memory. A computer-readable medium may also be a data communication network, e.g. the Internet, which allows downloading a program code. In general, the computer-readable medium may be a non-transitory or transitory medium.

A further aspect of the invention relates to a computer-readable medium storing a table of optimized pulse patterns for an electrical converter. The computer-readable medium may be a memory of the controller and in particular a non-volatile memory. For example, the memory and/or the table may comprise the optimized pulse patterns, when the controller and/or the memory is de-energized. However, as described above, it is not necessary that the computer-readable medium is a part of the electrical converter.

According to an embodiment of the invention, the table of optimized pulse patterns is indexed with respect to a set of modulation indices and a set of pulse numbers, wherein for a modulation index and a pulse number, an optimized pulse pattern comprises a vector of switching angles and at least one of a switching state and switching transition of at least one phase leg for each switching angle, wherein for at least some modulation indices and some pulse numbers, an optimized pulse pattern for a modulation index and a pulse number comprises switching angles, which correspond to different neutral point balancing values. Optimized pulse patterns stored in the table, corresponding to different neutral point balancing values, are optimized to increase and/or decrease a neutral point voltage at a neutral point of the electrical converter. Such an optimized pulse pattern, when applied to the electrical converter, may generate a positive or negative DC-component in the neutral point current. Such optimized pulse patterns may be directly stored in the table and/or may be derived from the optimized pulse patterns stored in the table by interpolating or extrapolating the switching angles from data values, which are stored with respect to different neutral point balancing values.

It has to be understood that features of the method as described in the above and in the following may be features of the controller, the computer program and the computer-readable media as described in the above and in the following. The same applies vice versa.

These and other aspects of the invention will be apparent from and elucidated with reference to the embodiments described hereinafter.

BRIEF DESCRIPTION OF THE DRAWINGS

The subject-matter of the invention will be explained in more detail in the following text with reference to exemplary embodiments which are illustrated in the attached drawings.

Fig. 1 schematically shows an electrical converter.

Fig. 2 shows a diagram illustrating a controller and a method for controlling the electrical converter of Fig. 1 according to an embodiment of the invention.

Fig. 3 shows a diagram illustrating a controller and a method for controlling the electrical converter of Fig. 1 according to a further embodiment of the invention.

Fig. 4 shows a diagram illustrating a controller and a method for controlling the electrical converter of Fig. 1 according to a further embodiment of the invention.

Fig. 5A and 5B show diagrams illustrating an optimized pulse pattern used in an embodiment of the invention and currents produced in the electrical converter.

Fig. 6 shows a diagram illustrating how an optimized pulse pattern is stored according to an embodiment of the invention.

Fig. 7 shows a diagram illustrating how an optimized pulse pattern is stored according to a further embodiment of the invention.

Fig. 8 shows a diagram illustrating how a reference flux is stored according to a further embodiment of the invention.

The reference symbols used in the drawings, and their meanings, are listed in summary form in the list of reference symbols. In principle, identical parts are provided with the same reference symbols in the figures.

DETAILED DESCRIPTION OF EXEMPLARY EMBODIMENTS

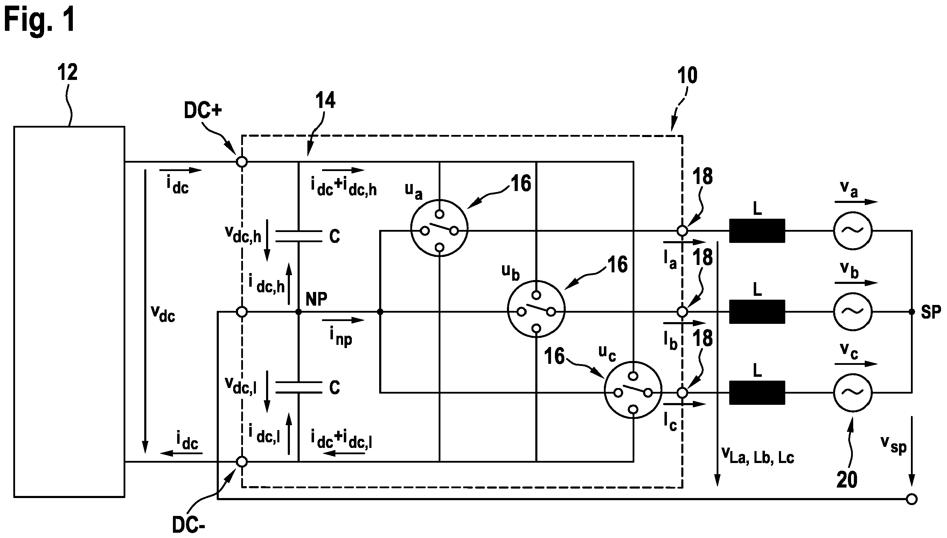

Fig. 1 shows a circuit diagram of an electrical converter 10. An energy source and/or sink 12, providing a DC voltage $v_{dc}$ between two terminals DC+, DC-, is connected to a DC-link 14 of the converter 10. The DC-link 14 comprises two series connected capacitors C, which are connected in parallel to the energy source and/or sink 12 and which provide a neutral point NP between them.
Three phase legs 16 are connected in parallel to the DC-link 14 and the energy source and/or sink 12. Every phase leg 16 is adapted for connecting a phase terminal 18 with any of the terminals DC+, DC- or neutral point NP. Every phase leg 16 may be a 3-Level Neutral Point Clamped (3L-NPC) phase leg or a 3-Level Active Neutral Point Clamped (3L-ANPC) phase leg. Each phase leg is composed of semiconductor switches, which may be switched into switching states, such that the respective phase terminal 18 is connected with any one of the terminals DC+, DC- or neutral point NP.
The phase legs 16 are controlled by the integer variables $u_p \in \{-1,0,1\}$ allowing the electrical connection of the phase leg 16 with letter $p \in \{a, b, c\}$, more letters are possible if more than 3 phases are provided, with the lower (DC-), neutral (NP) or upper (DC+) points of the DC-link 14, respectively. Other variables $u_p$ are possible, for example for an ANPC, which has two different zero states {+1 0+,0-,-1}, etc.
The phase terminals 18 supply an AC load and/or source 20, which is represented here in a simplified way as the series connection of an inductor L and a sinusoidal voltage source $v_{a,b,c}$ per phase terminal 18. The AC load and/or source 20 may be a synchronous or asynchronous machine, as well as an electrical grid, it may also include capacitors, etc. Fig. 1 shows a star connection with star point SP of the phase terminals 18, but a delta connection can also be used.
The neutral point voltage $v_{np}$ of the electrical converter 10 is defined as the difference of the voltages $v_{dc,l}$, $v_{dc,h}$ of the capacitors C that form the lower and upper halves of the DC-link 14, and is given by

$$v_{np}(t) = v_{dc,l}(t) - v_{dc,h}(t)$$

where $t$ is the time, $v_{dc,l}(t)$ is the voltage of the lower DC-link half, and $v_{dc,h}(t)$ is the voltage of the upper DC-link half.
Controlling the neutral point voltage within admissible bounds is usually paramount for the operation of converter 10, for two main reasons. Firstly, it should be ensured that the maximum voltage of the converter components is not exceeded. Secondly, undesired harmonics in the converter load should be avoided.

The neutral point voltage $v_{np}$ can mathematically be obtained by integrating the neutral point current $i_{np}$:

$$v_{np}(t) = -\frac{1}{2C} \int_0^t i_{np}(\tau)d\tau + v_{np}(0)$$

It is important to distinguish between two components of the neutral point voltage: the ripple and the DC-offset. The ripple is an inevitable consequence of the switching of the semiconductor switches of the electrical converter 10. When using optimized pulse patterns, as described herein, the ripple of the neutral voltage is periodic and can be predicted accurately. This allows to compute optimized pulse patterns, which minimize or limit the amplitude of the ripple.

The DC-offset of the neutral point voltage is defined as the averaged neutral point voltage over a fundamental period or another interval, such that the known ripple is eliminated.. The DC-offset is sensitive to disturbances, changes in operating points, quantization effects, and other non-idealities, making it difficult to predict and control. Herein, a novel approach to actively control the DC-offset of the neutral point voltage using specialized optimized pulse patterns is proposed.

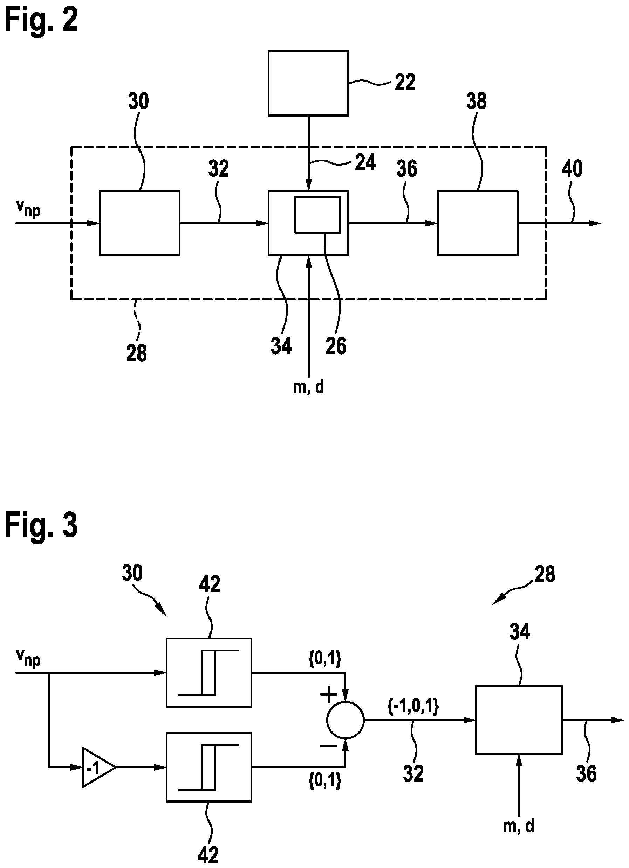

Fig. 2 shows a diagram illustrating a method and controller for controlling the electrical converter of Fig. 1.

The method comprises an offline part with pattern calculation block 22, in which optimized pulse patterns 24 are calculated with respect to specific optimization objectives and stored in table 26 in a controller 28 of the electrical converter 10. The offline part is performed before the operation of the electrical converter.

An online part of the method is performed during operation of the electrical converter 10 by the controller 28. During operation of the electrical converter, an actual modulation index $m$, an actual pulse number $d$ and the neutral point voltage $v_{np}$ are determined, for example by an outer controller. An outer controller, such as a real-time feedforward controller, may determine what modulation index $m$ is required to produce the desired fundamental voltage magnitude and what pulse number $d$ best produces the desired switching frequency.

The neutral point voltage $v_{np}$ is input into a balancing value determiner 30, which determines an actual neutral point balancing value 32 from the neutral point voltage $v_{np}$.

The actual modulation index $m$, the actual pulse number $d$ and the actual neutral point balancing value 32 are input into a pattern loader 34, which dependent thereof determines an optimized pulse pattern 36 from the table 26 of optimized pulse patterns 24 stored in the controller 28. With respect to the input values of the pattern loader 34, which stores the table 26 in a non-volatile memory, the modulation index $m$ may be the amplitude of the fundamental component of the optimized pulse pattern 24, and the pulse number $d$ may be the number of switching transitions within the first quarter of its period, or one quarter of the average switching transitions of a full period.

Optionally, the optimized pulse pattern 36 is modified by MP3C block 38, which based on model predictive control modifies switching angles of the optimized pulse patterns 24 to generate a modified optimized pulse pattern 40. When using advanced modulation schemes such as Model Predictive Pulse Pattern Control (MP3C), the optimized pulse pattern may not be applied directly, but first modified according to the rules of such a modulation scheme. See [7, 8] for details on a real-time method for adjusting the switching angles of an OPP to control the 3L-(A)NPC during transient and steady-state operation of the system.

In the end, the optimized pulse pattern 36 or modified optimized pulse pattern 40 is applied to the electrical converter 10.

In the following, several possibilities are described of how the actual neutral point balancing value 32 can be determined. The neutral point balancing value 32 is determined to discriminate between optimized pulse patterns 24 for the same pair of modulation index $m$ and pulse number $d$. As usual, some of the optimized pulse patterns 24 are optimized to provide a zero DC-component in the neutral point current $i_{np}$.

In the present method, two or more additional optimized pulse patterns 24 for each pair of modulation index $m$ and pulse number $d$ may be computed: one optimized pulse pattern 24 that creates a positive DC-component in the neutral point current $i_{np}$; and another OPP that creates a negative one. Furthermore, an optimized pulse pattern 24, which generates a zero DC-component neutral point current $i_{np}$ can also be used.

During operation, the controller 28 may select the optimized pulse pattern (OPP) 36 to be used according to the following rule:

$$\text{OPP to be used} = \begin{cases} \text{OPP with zero contribution, no DC component is required} \\ \text{OPP with positive contribution, NP voltage is too high} \\ \text{OPP with negative contribution, NP voltage is too low} \end{cases}$$

The actual neutral point balancing value 32 may be at least indicative of reducing and increasing the neutral point voltage $v_{np}$ and indicative of maintaining the neutral point voltage; 32.

The optimized pulse patterns 24 stored in the table 26 with respect to each pair of modulation index $m$ and pulse number $d$ may be seen as one optimized pulse pattern 24 with different vectors of switching angles. An optimized pulse pattern 24 stored in the table 26 with respect to a modulation index $m$ and a pulse number $d$ may comprise a first vector of switching angles corresponding to reducing the neutral point voltage $v_{np}$, a second vector of switching angles corresponding to increasing the neutral point voltage $v_{np}$ and a third vector of switching angles corresponding to maintaining the neutral point voltage $v_{np}$.

Fig. 3 shows a controller 28, which implements such a behaviour. The neutral point voltage $v_{NP}$ is passed to two hysteresis controllers 42 that detect whether it has deviated significantly from its desired zero value. Note that the actual neutral point balancing value 32 is selected from a set of discrete values {-1, 0, 1} and/or is determined from the neutral point voltage $v_{np}$ with hysteresis controllers 42 in this case.

Then, the outputs of the hysteresis controllers 42 are passed to the pattern loader 34 that decides which optimized pulse pattern 24 to load based on its input

1. if the input of the pattern loader 34 is -1, then the optimized pulse pattern 24 (and/or the first vector of switching angles) with positive contribution to the DC-component of the neutral point current $i_{np}$ is loaded.
2. if the input of the pattern loader 34 is 0, then the optimized pulse pattern 24 (and/or the third vector of switching angles) with zero contribution to the DC-component of the neutral point current $i_{np}$ is loaded.
3. if the input of the pattern loader 34 is 1, then the optimized pulse pattern 24 (and/or the second vector of switching angles) with negative contribution to the DC-component of the neutral point current $i_{np}$ is loaded.

In the end, the selected optimized pulse pattern 36 optionally may be further modified with MP3C block 38 and can be applied to the electrical converter 10. In this way, the perturbed neutral point voltage $v_{NP}$ is driven back to its equilibrium.

In general, the logic presented for neutral point balancing may hold regardless of the power flow, so for both motoring and generating operation. This may happen because the computed optimized pulse patterns 24 may provide the desired effect on the DC-component of the neutral point current $i_{np}$ regardless of the amplitude and phase of the fundamental current.

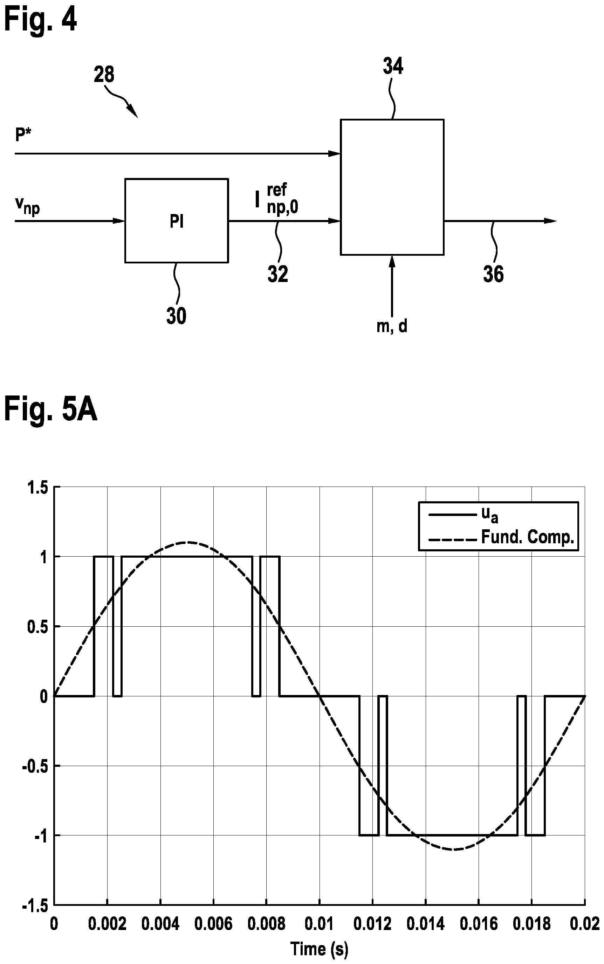

Fig. 4 shows a further embodiment of a controller 28 (which also can be combined with an MP3C block 38).

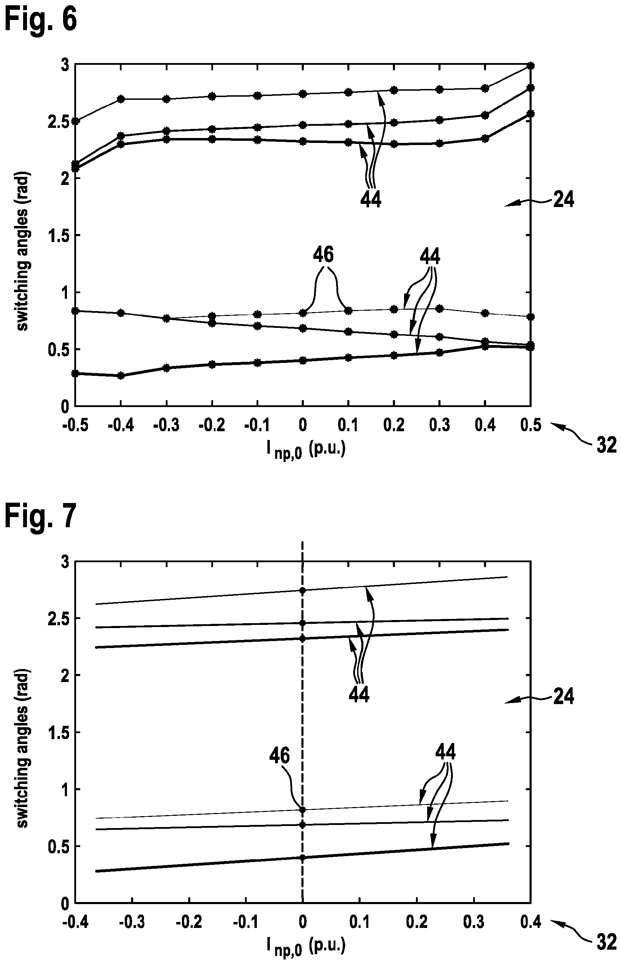

In general, instead of switching between discrete sets and/or vectors of optimized pulse patterns, a (for example linear) interpolation and/or extrapolation of the switching angles may be performed by the pattern loader 34. Such an interpolation and/or extrapolation may be based on a signal and/or quantity that is proportional to the DC-component of the neutral point current $i_{np}$ and which is and/or provides the actual neutral point balancing value 32. Optimized pulse patterns 24 with data values adapted for interpolation and extrapolation are described with respect to Fig. 6 and 7.

As an example, the actual neutral point balancing value 32 may be a function of an offset of the neutral point voltage $v_{np}$ with respect to a reference value, which can be zero.

As a further example, the actual neutral point balancing value 32 may be the output of a PI controller regulating the neutral point voltage $v_{np}$. The output of the PI controller, $I_{np,0}$, used as actual neutral point balancing value 32 is the desired DC-offset on the neutral point current $i_{np}$ which allows the pattern loader 34 to decide on the switching angle interpolation and/or extrapolation. The actual neutral point balancing value 32 is determined with a PI controller 34 from the neutral point voltage $v_{np}$.

Instead of a linear interpolation and/or extrapolation, a general function may be used as actual neutral point balancing value 32 to map $I_{np,0}$ to the changes in switching angles. This function also may be included as part of the constraints of the optimization problem of the optimized pulse patterns, such as described below.

Fig. 4 also shows that an actual active power reference $P^*$ may be taken into account for determining the optimized pulse pattern 36. The table 26 of optimized pulse patterns 24 may be additionally indexed with respect to a set of active power references $P^*$ and the optimized pulse patterns 24 may be stored with respect to the triple of modulation index $m$, the pulse number $d$ and the active power references $P^*$. It is possible that also such optimized pulse patterns 24 comprise data values, such as described with respect to Fig. 6 and 7, which are adapted for interpolation and extrapolation.

The actual active power reference $P^*$ may be determined from an outer controller and/or may be used to control the active power at the phase output 18 of the electrical converter 10.

The optimized pulse pattern 36 to be applied to the electrical converter 10 then may be selected from the table 26 with respect to the modulation index $m$, the pulse number $d$ and the actual active power reference $P^*$.

Fig. 5A shows an example for an optimized pulse pattern 24. In general, an optimized pulse pattern 24 with modulation index $m$ in phase p is a switching waveform repeating over time with a specified period and is fully defined by its set of pairs of switching angles $\Theta = \{\theta_1, \theta_2, ..., \theta_{4d}\}$ and changes in converter phase switch position $\boldsymbol{F} = \{f_1, f_2, ..., f_{4d}\}$. Typically the switch positions or states U are derived from the change in switch position and these signals are applied to each phase leg 16. The states may be derived as $u_k = u_{k-1} + fk$

This means that, when a phase reaches angle $\theta_j$, the electrical converter 10 is commanded to change the output voltage by a step of $f_k$. Notice that the modulation index $m$ is a function of the switching angles $\Theta$ and changes in converter switch positions $\mathbf{F}$, i.e.,

$$m = g_0(\boldsymbol{\Theta}, \boldsymbol{F}).$$

The optimized pulse patterns 24 are pulse patterns derived by solving a multi-objective optimization problem such as minimizing current harmonic distortions or switching losses.

The sets of switching angles defining optimized pulse patterns 24 are typically computed offline, such as in block 22, and stored in a look-up-table, such as table 26, for different values of modulation indices $m$ and pulse numbers $d$.

A typical problem for optimizing optimized pulse patterns 24 can be stated as follows:

$$\min_{\boldsymbol{\Theta}, \boldsymbol{F}} \quad h(\boldsymbol{\Theta}, \mathbf{F})$$

$$\text{s.t.} \quad m = g_0(\boldsymbol{\Theta}, \mathbf{F})$$

$$0 = g_1(\boldsymbol{\Theta}, \mathbf{F})$$

$$\vdots$$

$$0 \leq q_1(\boldsymbol{\Theta}, \mathbf{F})$$

$$\vdots$$

where $h(\Theta, \mathbf{F})$ is the objective function, $g_k(\Theta, \mathbf{F})$, $k = 1, ...$ are optional equality constraints, and $q_k (\Theta, \mathbf{F})$, $k = 1, ...$ are optional inequality constraints.

The objective function typically includes performance indicators, such as the expected total harmonic distortion (THD) produced by the electrical converter 10 when connected to a load 20 with known model structure. One common such objective is the current THD in motors, whose harmonic model is typically approximated by an inductor.

The equality and inequality constraints typically contain converter operational requirements. For instance, a gate drive circuit may impose a minimum time interval between consecutive switching instances in the same phase. In addition, a clamp circuit may impose restrictions on switching times involving different phases.

For the operation of the electrical converter 10 with variable output voltages, the optimized pulse pattern problem above may be solved for different values of modulation indices $m$. Similarly, for operation with variable fundamental or switching frequency, the optimized pulse pattern problem may be solved for different values of pulse number $d$. Finally, the arguments $\Theta$, $\mathbf{F}$ that solve the optimized pulse pattern problem above for a grid of different modulation indices $m$ and pulse numbers $d$ results are stored in the look-up-table 26.

It can be shown that optimized pulse patterns with half-wave symmetry do not generate a non-zero DC-offset in the neutral point current $i_{np}$ and therefore cannot be used for regulation of the neutral point voltage. Usually, optimized pulse patterns are computed with half-wave symmetry to reduce the number of decision variables in their optimization problem. Contrary to this, in the present disclosure, the optimized pulse patterns 24 are stored in the table 26 for a complete fundamental cycle, i.e. for 360°.

This can be seen in Fig. 5A, where the switching angles in the second half-cycle are not symmetric with the ones of the first half-cycle. It also may be possible that the optimized pulse patterns 24 stored in the table 26 are asymmetric with respect to a quarter of the complete fundamental cycle.

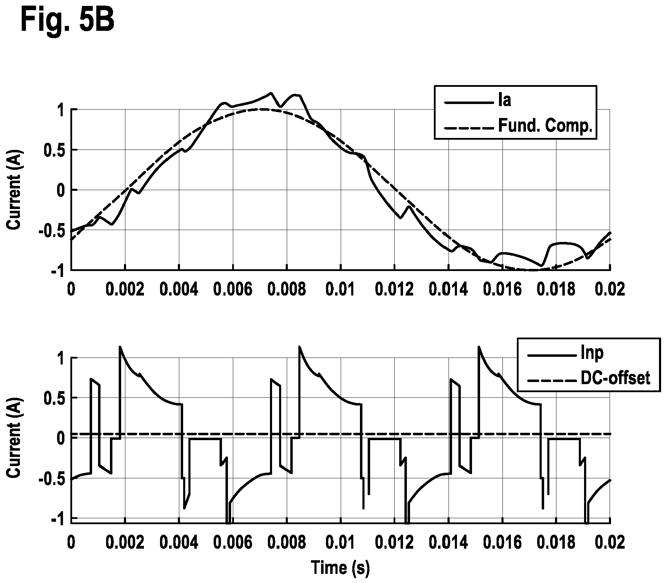

In Fig. 5B, the phase current $I_a$ and the neutral point current $I_{np}$ for the optimized pulse pattern 24 of Fig. 5A are shown. It can be seen that the optimized pulse pattern 24 of Fig. 5A has been optimized to generate a non-zero DC-component of the neutral point current $i_{np}$.

Returning to Fig. 2, the optimization problem performed by block 22 can be summarized as follows: How to modify the switching angles of an optimized pulse pattern in order to regulate the DC-component of the neutral point voltage, while maintaining other desired properties of the optimized pulse pattern, such as the desired modulation index, zero phase shift, etc.

In block 22, this modification of the switching angles is performed offline, i.e., by calculating and storing optimized pulse patterns 25 with non-zero DC-offset contribution to the neutral point current $i_{np}$.

To formulate this optimization problem, let the converter current of a given phase leg $p \in \{a, b, c\}$ be denoted as $i_p(\theta)$, see Fig. 1, with the angle $\theta \in [0, 2\pi]$ as argument. Using Fourier analysis, the phase current $i_p(\theta)$ can be fully described by

$$i_p(\theta) = \sum_{h \in \mathcal{H}_1} a_{i,h} \cos(h\theta) + b_{i,h} \sin(h\theta)$$
$$= \sum_{h \in \mathcal{H}_1} i_h \sin(h\theta - \phi_h)$$

where $a_{i,h}$ and $b_{i,h}$ are Fourier series coefficients, and $H_1 = \{1,2,4,5,7 \cdots\}$ are the non-triplen harmonic numbers, and

$$i_h = \sqrt{a_{i,h}^2 + b_{i,h}^2} \quad \text{and}$$

$$\phi_h = -\tan^{-1}(a_{i,h}/b_{i,h}).$$

Moreover, let the switching function of a given phase $p \in \{a, b, c\}$ be denoted as $u_p(\theta)$, see Fig. 1. The absolute value of the switching function of a converter phase is denoted as

$$|u_p(\theta)| = \begin{cases} 0, & \textit{if the phase is connected to the NP} \\ 1, & \textit{otherwise} \end{cases}$$

Using Fourier Series, one can write

$$|u_p(\theta)| = \frac{a_{|u|,h}}{2} + \sum_{h \in \mathcal{H}_1} a_{|u|,h} \cos(h\theta) + b_{|u|,h} \sin(h\theta).$$

An analytical expression for the DC-component $I_{NP,0}$ of the neutral point current can be derived in the following way.

$$|u_a|i_{a,h} = \frac{a_{|u|,0}}{2}\sin(h\theta - \phi_h) + \sum_{n\in k, k\in\mathbb{N}_+} a_{|u|,n}\cos(n\theta)\sin(h\theta - \phi_h)$$

$$+ \sum_{n\in k, k\in\mathbb{N}_+} b_{|u|,n}\sin(n\theta)\sin(h\theta - \phi_h)$$

$$= \frac{a_{|u|,0}}{2}\sin(h\theta - \phi_h) + \sum_{n\in k, k\in\mathbb{N}_+}\frac{a_{|u|,n}}{2}\left(\sin\big((n+h)\theta - \phi_h\big) - \sin\big((n-h)\theta + \phi_h\big)\right)$$

$$- \sum_{n\in k, k\in\mathbb{N}_+}\frac{b_{|u|,n}}{2}\left(\cos\big((n+h)\theta - \phi_h\big) - \cos\big((n-h)\theta + \phi_h\big)\right)$$

$$= \frac{a_{|u|,0}}{2}\sin(h\theta - \phi_h) + \sum_{n\in k+h, k\in\mathbb{N}_+}\frac{a_{|u|,n-h}}{2}\sin(n\theta - \phi_h) -$$

$$\sum_{n\in k-h, k\in\mathbb{N}_+}\frac{a_{|u|,n+h}}{2}\sin(n\theta + \phi_h)$$

$$- \sum_{n\in k+h, k\in\mathbb{N}_+}\frac{b_{|u|,n-h}}{2}\cos(n\theta - \phi_h) + \sum_{n\in k+h, k\in\mathbb{N}_+}\frac{b_{|u|,n+h}}{2}\cos(n\theta + \phi_h)$$

$$= \sum_{n\in k+h, k\in\mathbb{N}}\frac{a_{|u|,n-h}}{2}\sin(n\theta - \phi_h) - \sum_{n\in k-h, k\in\mathbb{N}_+}\frac{a_{|u|,n+h}}{2}\sin(n\theta + \phi_h)$$

$$- \sum_{n\in k+h, k\in\mathbb{N}}\frac{b_{|u|,n-h}}{2}\cos(n\theta - \phi_h) + \sum_{n\in k-h, k\in\mathbb{N}_+}\frac{b_{|u|,n+h}}{2}\cos(n\theta + \phi_h)$$

It is evident that a DC-offset on $|u_a|i_a$ is generated for $h = k$, $k \in \mathbb{N}$. This is given by

$$\overline{|u_a|i_a} = \sum_{h\in\mathbb{N}_+} i_h\left(\frac{b_{|u|,h}}{2}\cos(\phi_h) - \frac{a_{|u|,h}}{2}\sin(\phi_h)\right),$$

where the bar denotes the DC-component of the term. Hence,

$$i_{np,0} = -\sum_{x\in\{a,b,c\}}\overline{|u_x|i_x} = -\frac{3}{2}\sum_{h\in\mathbb{N}_+} i_h\big(b_{|u|,h}\cos(\phi_h) - a_{|u|,h}\sin(\phi_h)\big)$$

Using the trigonometric identifies, $\cos\big(\tan^{-1}(x)\big) = 1/\sqrt{1+x^2}$ and

$$! \sin\big(\tan^{-1}(x)\big) =$$

$$x/\sqrt{1+x^2},$$

$$i_{np,0} = -\frac{3}{2}\sum_{h\in\mathbb{N}_+}\big(a_{|u|,h}a_{i,h} + b_{|u|,h}b_{i,h}\big)$$

Thus, the DC-component $I_{NP,0}$ of the neutral point current of a 3L-NPC converter operated using optimized pulse is given by

$$I_{NP,0} = -\frac{3}{2}\big(P_{fund} + P_{harm}\big)$$

where $P_{fund}$ is a component that depends on the fundamental current:

$$P_{fund} = a_{|u|,1}a_{i,1} + b_{|u|,1}b_{i,1}$$

and $P_{harm}$ is a component that does not depend on the fundamental current, only on the harmonic components:

$$P_{harm} = \sum_{h \in \mathcal{H}} a_{|u|,h}a_{i,h} + b_{|u|,h}b_{i,h}.$$

Here $H = \{2,4,5,7, \cdots \}$ is the set of non-triplen harmonics greater than one.

To obtain optimized pulse patterns that can create a constant DC-component $I_{NP,0}$ on the neutral point current $i_{np}$ regardless of the amplitude and phase of the fundamental current, it is enough to ensure that

$$a_{|u|,1} = 0$$

and

$$b_{|u|,1} = 0.$$

This can be achieved by adding equality constraints to the optimization problem as stated above. For example, by making

$$g_1(\mathbf{\Theta}, \mathbf{F}) = a_{|u|,1}$$

$$g_2(\mathbf{\Theta}, \mathbf{F}) = b_{|u|,1}$$

Additionally, it is desirable to choose the amplitude of the DC-component $I_{NP,0}$ of the natural point current. This can be done by using the equality constraint

$$g_3(\mathbf{\Theta}, \mathbf{F}) = P_{harm} + \frac{2}{3}I_{NP,0}.$$

Instead of enforcing $a_{|u|,1} = 0$ and $b_{|u|,1} = 0$, the optimized pulse pattern problem can be formulated with the constraint and/or objective of providing at least a given DC-component $I_{NP,0}$ of the neutral point current for an expected range of $a_{i,1}$, and $b_{i,1}$. For example, it is known that electrically-excited synchronous machines can be made to operate with unity power factor, which results in $a_{i,1} = 0$. In this case, the optimized pulse pattern problem is free to assign any value to $a_{|u|,1}$, since the product $a_{|u|,1}a_{i,1}$ will still be zero.

Expanding on the idea above and using the fact that $b_{i,1}$ correlates strongly with the active power, different optimized pulse patterns can be calculated for given ranges of $b_{i,1}$. In this case, the real-time mechanism to choose the optimized pulse pattern to be used will take into account not only the desired neutral point current, but also the active power reference $P^*$. Such optimized pulse patterns are used in the embodiment shown in Fig. 4, where an actual active power reference $P^*$ is determined and input into the pattern loader 34.

Fig. 6 shows an embodiment, of optimized pulse patterns 24 stored in a table 26. Fig. 6 shows an example of an optimized pulse pattern 24 for a specific modulation index $m$ and a specific pulse number $d$ (here $d=6$). For a discrete set of neutral point balancing values 32, which here are the per unit DC-component $I_{NP,0}$ of the neutral point current in steps of 0.1 pu between -0.5 pu and 0.5 pu, the switching angles are stored in the table 26. For every transition 44, a switching angle for a DC-component $I_{NP,0}$ from the set of DC-components is stored. Note that for the DC-component $I_{NP,0} = -0.5$ and $I_{NP,0} = 0.5$, the switching angles for different pulses are equal and therefore strictly less than 6 different switching angles are present.

A corresponding actual neutral point balancing value 32 for example may be calculated by the PI controller 34 (see Fig. 4).

The switching angles for one specific neutral point balancing value 32 may be seen as a vector of switching angles.

The switching angles stored with respect to different neutral point balancing values 32 but corresponding to one specific transition 44 are data values 46 for the switching angles. Here, the switching angle for an actual neutral point balancing value 32 may be determined by linear interpolation between the data values 46. However, other interpolation methods, such as with splines, are possible.

An optimized pulse pattern 24 stored in the table 26 with respect to a modulation index $m$ and a pulse number $d$ comprises data values 46 for each switching angle for at least two different neutral point balancing values 32. The switching angles between the at least two different neutral point balancing values 32 may be determined by interpolation between the data values 46 and/or by extrapolation starting from one of the data values 46.

Fig. 7 shows an embodiment of an optimized pulse pattern 24 stored in a table 26. In Fig. 7, each switching angle for a transition 44 is stored as one data point 46 at $I_{np,0} = 0$ along with parameters for linear functions, which also may be interpreted as data values, in this case adapted for extrapolation. Also, more complicated functions, such as splines, may be used.

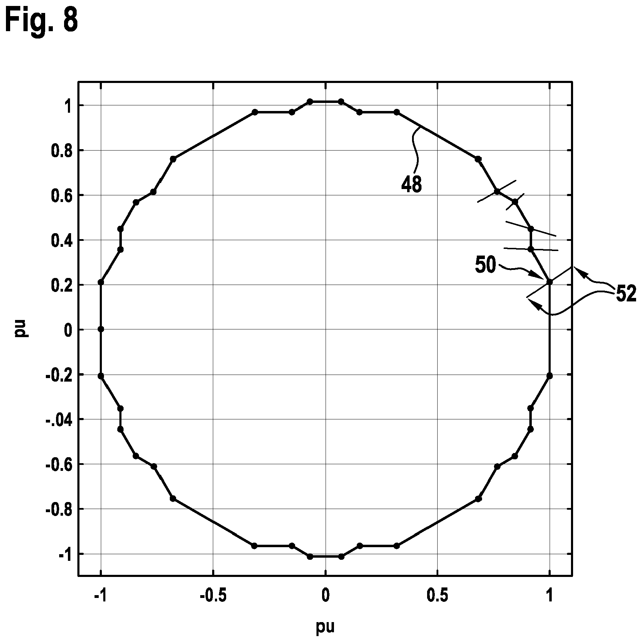

Fig. 8 shows an embodiment of a reference flux trajectory 48 stored in a table 26 as a set of corner points. For example, the pattern loader 34 also selects a reference flux trajectory 48, which then is used by MP3C block 38 to modify the switching angles of the optimized pulse pattern 36, such that the reference flux trajectory 48 is tracked.

The reference flux trajectory 48 can also take into account the neutral point voltage. Usually, with MP3C, the flux trajectory reference is computed by integrating the expected converter output voltage assuming that the DC-link voltage is balanced. However, this assumption can be relaxed. The reference flux trajectory 48 can be computed by integrating the expected converter output voltage using the data values 46 from Fig. 6 with at least two different neutral point balancing values 32. From these values interpolation functions and/or curves can be found. Such a computed reference flux trajectory 48 with data values adapted for interpolation and/or extrapolation can be stored in the corresponding optimized pulse pattern 24 in the table 26.

To this end, an optimized pulse pattern 24 stored in the table 26 with respect to a modulation index $m$ and a pulse number $d$ may comprise corner points 50 for a reference flux trajectory 48 corresponding to the switching angles of the optimized pulse pattern 24. The reference flux trajectory 48 may be interpolated between these corner points 50 as shown in Fig. 8.

Furthermore, to take account of the different neutral point balancing values 32 and/or neutral point voltages and/or DC-components of the neutral point current, the optimized pulse pattern 24 comprises parameters for curves 52 for the corner points 50 for interpolating and/or extrapolating the corner points 50 between different neutral point balancing values 32. From these curves 52 and the corner points 50, interpolated and/or extrapolated corner points along the curves 52 for an interpolated and/or extrapolated reference flux trajectory can be determined with the aid of the actual neutral point balancing value 32.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practicing the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

**Claims**

1.  A method for controlling an electrical converter (10), wherein the electrical converter (10) comprises a positive terminal (DC+), a negative terminal (DC-) and a neutral point (NP) and at least one phase output (18) connectable to the positive terminal (DC+), the negative terminal (DC-) and to the neutral point (NP) via at least one phase leg (16); the method comprising:

    determining an actual modulation index (m) and an actual pulse number (d);
    determining a neutral point voltage ($v_{np}$) of the neutral point (NP);
    determining an actual neutral point balancing value (32) from the neutral point voltage ($v_{np}$);
    determining an optimized pulse pattern (36) to be applied to the electrical converter (10) from a table (26) of optimized pulse patterns (24) stored in a controller (28) of the electrical converter (10);

applying the determined optimized pulse pattern (36) to the electrical converter (10);

wherein the table (26) of optimized pulse patterns (24) is indexed with respect to a set of modulation indices (m) and a set of pulse numbers (d) and the optimized pulse pattern (36) is determined based on the actual modulation index (m) and the actual pulse number (d);

wherein for a modulation index (m) and a pulse number (d) an optimized pulse pattern (24) stored in the table (26) comprises switching angles and at least one of a switching state and a switching transition of the at least one phase leg (16) for each switching angle;

wherein for at least some modulation indices (m) and some pulse numbers (d), an optimized pulse pattern (24) stored in the table (26) with respect to a modulation index (m) and a pulse number (d) comprises switching angles, which correspond to different neutral point balancing values (32);

wherein the switching angles of the optimized pulse pattern (24) to be applied to the electrical converter (10) are determined from the switching angles, which correspond to different neutral point balancing values, as a function of the actual neutral point balancing value (32).

2. The method of claim 1,

wherein the actual neutral point balancing value (32) is at least indicative of reducing and increasing the neutral point voltage ($v_{np}$);

wherein an optimized pulse pattern (24) stored in the table (26) with respect to a modulation index (m) and a pulse number (d) comprises a first vector of switching angles corresponding to reducing the neutral point voltage ($v_{np}$) and a second vector of switching angles corresponding to increasing the neutral point voltage ($v_{np}$).

3. The method of claim 1 or 2,

wherein the actual neutral point balancing value (32) is indicative of maintaining the neutral point voltage;

wherein an optimized pulse pattern (24) stored in the table (26) with respect to a modulation index (m) and a pulse number (d) comprises a vector of switching angles corresponding to maintaining the neutral point voltage ($v_{np}$).

4. The method of one of the preceding claims,

wherein an optimized pulse pattern (24) stored in the table (26) with respect to a modulation index (m) and a pulse number (d) comprises data values (46) to determine a switching angle for at least two different neutral point balancing values (32);

wherein switching angles are determined by interpolation and/or extrapolation with respect to the data values (46).

5. The method of one of the previous claims,

wherein the actual neutral point balancing value (32) is selected from a set of discrete values;

wherein the actual neutral point balancing value (32) is determined from the neutral point voltage ($v_{np}$) with a hysteresis controller.

6. The method of one of claims 1 to 4,
wherein the actual neutral point balancing value (32) is a function of an offset of the neutral point voltage ($v_{np}$) with respect to a reference value.

7. The method of one of claims 1 to 4,
wherein the actual neutral point balancing value (32) is determined with a PI controller (34) from the neutral point voltage ($v_{np}$).

8. The method of one of the preceding claims,

wherein an actual active power reference ($P^*$) to be provided for the at least one phase output is determined;

wherein the table (26) of optimized pulse patterns (24) is additionally indexed with respect to a set of active power references ($P^*$);

wherein the optimized pulse pattern (36) to be applied to the electrical converter (10) is selected from the table (26) with respect to the actual active power reference ($P^*$).

9.  The method of one of the preceding claims,

    wherein the optimized pulse patterns (24) are stored in the table (26) for a complete fundamental cycle;
    wherein the optimized pulse patterns (24) stored in the table (26) are asymmetric with respect to a quarter of the complete fundamental cycle;
    wherein the optimized pulse patterns (24) stored in the table (26) have been optimized to generate a non-zero DC-component of the neutral point current ($i_{np}$).

10. The method of one of the preceding claims, further comprising:

    modifying the switching angles of the optimized pulse pattern (36) to be applied to the electrical converter (10) with model predictive control;
    wherein the switching angles are modified to track a reference flux trajectory.

11. The method of one of the preceding claims,

    wherein an optimized pulse pattern (24) stored in the table (26) with respect to a modulation index (m) and a pulse number (d) comprises corner points (50) for a reference flux trajectory (48) corresponding to the switching angles of the optimized pulse pattern (24);
    wherein the optimized pulse pattern (24) comprises parameter for curves (52) for the corner points (50) for interpolating and/or extrapolating the corner points (50) between different neutral point balancing values (32);
    wherein interpolated and/or extrapolated corner points (50) for an interpolated and/or extrapolated reference flux trajectory are determined from the actual neutral point balancing value (32).

12. A controller (28) for an electrical converter (10) adapted for performing the method of one of the preceding claims.

13. A computer program, which, when being executed by a processor of a controller of an electrical converter, is adapted for performing the method of one of claims 1 to 11.

14. A computer-readable medium, in which a computer program according to claim 13 is stored.

15. A computer-readable medium storing a table (26) of optimized pulse patterns (24) for an electrical converter (10),

    wherein the table (26) of optimized pulse patterns (24) is indexed with respect to a set of modulation indices (m) and a set of pulse numbers (d);
    wherein for a modulation index (m) and a pulse number (d), an optimized pulse pattern (24) comprises switching angles and at least one of a switching state and a switching transition of at least one phase leg (16) of the electrical converter (10) for each switching angle;
    wherein for at least some modulation indices (m) and pulse numbers (d), an optimized pulse pattern (24) for a modulation index (m) and a pulse number (d) comprises switching angles, which correspond to different neutral point balancing values (32);
    wherein optimized pulse patterns (24) corresponding to different neutral point balancing values (32) are optimized to increase and/or decrease a neutral point voltage ($v_{np}$) at a neutral point (NP) of the electrical converter (10).

Fig. 1

# Fig. 2

m, d

# Fig. 3

m, d

# Fig. 4

# Fig. 5A

# Fig. 5B

**Fig. 6**

**Fig. 7**

# Fig. 8

Europäisches
Patentamt

European
Patent Office

Office européen
des brevets

# EUROPEAN SEARCH REPORT

Application Number

EP 21 21 3343

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ZHANG XIAO-HUA ET AL: "Neutral point potential balance algorithm for three-level NPC inverter based on SHEPWM", ELECTRONICS LETTERS, THE INSTITUTION OF ENGINEERING AND TECHNOLOGY, GB, vol. 53, no. 23, 9 November 2017 (2017-11-09), pages 1542-1544, XP006074604, ISSN: 0013-5194, DOI: 10.1049/EL.2017.3191 * abstract * * page 1542 - page 1544; figures 1-5 * ----- | 1-15 | INV. H02M7/487 H02M1/12 H02M1/15 ADD. H02M1/32 |
| Y | SANCHEZ-RUIZ ALAIN ET AL: "DC-Link Neutral Point Control for 3L-NPC Converters Utilizing Selective Harmonic Elimination-PWM", IEEE TRANSACTIONS ON INDUSTRIAL ELECTRONICS, IEEE SERVICE CENTER, PISCATAWAY, NJ, USA, vol. 69, no. 9, 22 September 2021 (2021-09-22), pages 8633-8644, XP011905112, ISSN: 0278-0046, DOI: 10.1109/TIE.2021.3113019 [retrieved on 2021-09-22] * abstract * * Sections I-III; figures 1-6 * ----- -/-- | 1-15 | TECHNICAL FIELDS SEARCHED (IPC) H02M |

The present search report has been drawn up for all claims

| Place of search | Date of completion of the search | Examiner |
|---|---|---|
| The Hague | 22 May 2022 | Adami, Salah-Eddine |

EPO FORM 1503 03.82 (P04C01)

page 1 of 2

Europäisches
Patentamt

European
Patent Office

Office européen
des brevets

**EUROPEAN SEARCH REPORT**

Application Number

EP 21 21 3343

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WU MINGZHE ET AL: "A Novel Voltage Balancing Strategy for Four-Level Hybrid-Clamped Converters Under Selective Harmonic Elimination PWM", 2020 IEEE ENERGY CONVERSION CONGRESS AND EXPOSITION (ECCE), IEEE, 11 October 2020 (2020-10-11), pages 2212-2218, XP033851321, DOI: 10.1109/ECCE44975.2020.9236375 [retrieved on 2020-10-21] * abstract * * figures 1-14 * * sections I-V * ----- | 1-15 | |

TECHNICAL FIELDS
SEARCHED    (IPC)

The present search report has been drawn up for all claims

| Place of search | Date of completion of the search | Examiner |
|---|---|---|
| The Hague | 22 May 2022 | Adami, Salah-Eddine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

**EP 4 195 490 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10516328 B2